# EUROPÄISCHE PATENTSCHRIFT

(11) **EP 3 763 593 B1**
(45) Veröffentlichungstag und Bekanntmachung des Hinweises auf die Patenterteilung: **28.02.2024**
(21) Anmeldenummer: 20183990.9
(22) Anmeldetag: 03.07.2020
(51) Int. Cl.: B61D 23/02, B60R 3/02, B61D 23/00

(54) **MEHRTEILIGE TRITTLEISTE**
MULTI-PART STEPLADDER
GARDE-PIED À PIÈCES MULTIPLES

(30) Priorität: 11.07.2019 DE 202019103832 U; 30.04.2020 DE 202020102430 U
(43) Veröffentlichungstag der Anmeldung: 13.01.2021
(73) Patentinhaber: Gebr. Bode GmbH & Co. KG, 34123 Kassel (DE)
(72) Erfinder: Theis, Christoph, 34537 Bad Wildungen (DE); Arend, Ulrich, 34576 Dickershausen (DE)
(74) Vertreter: Patentanwälte Bauer Vorberg Kayser

(56) Entgegenhaltungen:
- WO-A1-2005/108161
- DE-A1-102010 033 983
- DE-A1-102017 126 948
- DE-U1- 9 305 299
- DE-U1- 20 318 186
- DE-U1-202006 017 716
- JP-A- 2002 144 961

## Beschreibung

Die Erfindung bezieht sich auf Fahrzeuge zur Beförderung von Personen und/oder Gütern, insbesondere Fahrzeuge des öffentlichen Nahverkehrs, wie Bahnen und Busse. Fahrzeuge des öffentlichen Nahverkehrs sind beispielsweise Kraftfahrzeuge, zum Beispiels Busse für den innerstädtischen Linienverkehr, oder schienengebundene Fahrzeuge, wie zum Beispiel S-Bahnen, Regionalzüge, Intercityzüge oder Schnellzüge.

Solche Fahrzeuge weisen in Fahrtrichtung entlang einer Längsachse eine Haupterstreckung auf. Quer zur Fahrtrichtung sind in den Seitenwänden der Fahrzeuge Türsysteme angeordnet, die den Ein- und Ausstieg der zu befördernden Personen bzw. das Be- und Entladen der zu befördernden Güter ermöglichen. Solche Türsysteme erstrecken sich ausgehend von einer Fußbodenebne solcher Fahrzeuge im Einbauzustand im Wesentlichen in orthogonaler Richtung in die Höhe.

Im Bereich des jeweiligen Türsystems ist unterhalb des Fußbodens solcher Fahrzeuge üblicherweise ein Schiebetrittsystem angeordnet. Das Schiebetrittsystem erleichtert den Ein- und Ausstieg der zu befördernden Personen bzw. das Be- und Entladen der zu befördernden Güter. Dazu ist das Schiebetrittsystem ausgebildet im Betrieb einen horizontalen Abstand und/oder einen vertikalen Höhenunterschied eines Fahrzeugs, beispielsweise gegenüber einem Bahnsteig, einer Straße, einem Bürgersteig und/oder einer Be- und Entladungsebene, auszugleichen. Bekannte Schiebetrittsysteme umfassen einen Ausschub, mit dem der horizontale und/oder vertikale Abstand im Betrieb ausgeglichen wird. Der Ausschub ist beispielsweise als Rampe, als Schiebe-Hub-Tritt und/oder mehrstufig ausgebildet. Das Schiebetrittsystem wird auch Schiebetrittkassette genannt.

Das Schiebetrittsystem wird üblicherweise über ein Montagerahmen an den Fahrzeugen unterhalb einer Trittleiste montiert. Im Betrieb fährt unterhalb der Trittleiste der Ausschub des Schiebetrittsystems quer zu der Längsachse aus, um den horizontalen Abstand und/oder einen vertikalen Höhenunterschied auszugleichen. Das Ausfahren des Ausschubs umfasst einen rotatorischen und/oder translatorischen Bewegungsablauf des Ausschubs, beispielsweise ein Klappen der Rampe oder ein Schwenken und/oder translatorisches Verfahren des Schiebe-Hub-Tritts.

Für das Ausfahren des Ausschubs umfasst das Schiebetrittsystem üblicherweise eine Antriebseinheit.

Die Trittleiste schließt den Fußboden der Fahrzeuge nach außen bzw. zum Fahrzeuginneren und gegenüber dem Türsystem im Bereich des montierten Schiebetrittsystems ab. Dazu ist die Trittleiste in der Regel an ihren Enden an den Fahrzeugen befestigt. Dazu wird die an dem Fahrzeug befestigte Trittleiste gegenüber dem Fahrzeug im Zuge einer Erstmontage der Trittleiste abgedichtet. Die Trittleiste wird gegenüber dem Fahrzeug beispielsweise mit einer Dichtmasse abgedichtet. Eine solch abgedichtet und an dem Fahrzeug befestigte Trittleiste kann für Wartungsarbeiten nicht demontiert werden ohne die Abdichtung zu zerstören. Insoweit ist es bevorzugt, die Trittleiste für Wartungsarbeiten nicht zu demontieren, um den Wartungsaufwand zu minimieren.

Die Trittleiste muss resultierende Lasten der zu befördernden Personen und/oder Güter aufnehmen. Die Lasten treten insbesondere beim Ein- und Ausstieg der zu befördernden Personen bzw. beim Be- und Entladen der zu befördernden Güter auf. Um eine ausreichende Festigkeit der Trittleiste zu gewähren bzw. um eine Durchbiegung der Trittleiste zu begrenzen ist die Trittleiste massiv ausgelegt. Insbesondere ist die Trittleiste im Einbauzustand im Wesentlichen in orthogonaler Richtung zu der Fußbodenebene des Fahrzeugs massiv ausgebildet. Eine solch massiv ausgebildete und mit dem Fahrzeug abgedichtete verbundene Trittleiste verhindert allerdings eine Entnahme des Schiebetrittsystems zu Wartungszwecken, ohne die Abdichtung zu zerstören.

Meist ist dieser Platz unterhalb des Fußbodens des Fahrzeugs im Bereich des Türsystems - an dem das jeweilige Schiebetrittsystem zu montieren ist - sehr begrenzt, sodass das Schiebetrittsystem zur Montage nicht als gesamte Kassette eingeschoben werden kann, sondern vom Fahrzeuginneren durch die Fußbodenebene der Fahrzeuge montiert werden muss. Insbesondere für Wartungsarbeiten an dem Schiebetrittsystem muss das Schiebetrittsystem vom Fahrzeuginneren aus demontiert und wieder montiert werden. Diese Art der Montage und Wartung des Schiebetrittsystems ist aufwändig.

Um das Schiebetrittsystem als gesamte Kassette, d.h. als vollständige Einheit, unterhalb der Trittleiste zu montieren, ist es erforderlich den vertikalen Platz zur Montage / Wartung zu vergrößern. Allerdings sind Trittleisten nach derzeitigem Stand der Technik einteilig ausgebildet, so dass der vertikale Platz zur Montage / Wartung in Richtung bekannter Trittleisten nicht vergrößert werden kann. Die Druckschrift DE 10 2014 210 783 A1 zeigt beispielsweise eine solche einteilige Trittleiste, an die sich ein Schiebetritt-Gehäuse nach innen zu einem Schienenfahrzeug anschließt. Aus der Druckschrift DE 10 2015 203 301 A1 ist eine gewinkelte metallische einteilige Trittleiste bzw. eine metallische streifenförmige einteilige Trittleiste bekannt. Insbesondere ist gewünscht, die zur Abdichtung während der Erstmontage abgedichtete Trittleiste bei Wartungsarbeiten nicht zu demontieren.

Aus DE 10 2017 126 948 A1 ist zudem eine Trittleistenvorrichtung für ein Schiebetritt-Einstiegssystem bekannt, wobei die Trittleistenvorrichtung eine Trittleisteneinrichtung mit einer Abstreifeinrichtung aufweist.

Aus DE 10 2010 033 983 A1 ist eine Feuerschutztür für Schienenfahrzeuge mit einer Trittleiste bekannt.

Aus DE 203 18 186 U1 ist eine Einstiegsrampe für Kraftfahrzeuge bekannt.

Aus JP 2002 144961 A ist eine einklappbare Trittleiste bekannt.

Aus WO 2005/108161 A1 ist eine Brückenvorrichtung mit mehreren Brückengliedern bekannt, sodass die Brückenvorrichtung teleskopartig ausfahrbar ist.

Somit ist ein Ziel der Erfindung, die Montage des Schiebetrittsytems zu erleichtern. Ferner ist ein bevorzugtes Ziel der Erfindung, den Wartungsaufwand des Schiebetrittsystems zu reduzieren. Insbesondere ist es ein Ziel der Erfindung, die Montagekosten und/oder Wartungskosten des Schiebetrittsystems zu reduzieren.

Gemäß einem ersten Aspekt der Erfindung wird die Aufgabe gemäß Anspruch 1 gelöst. Gemäß dem ersten Aspekt der Erfindung ist eine Trittleiste für ein Fahrzeug vorgesehen, die mindestens zwei Teile umfasst. Die erfindungsgemäße Trittleiste ist also eine zumindest zweiteilige Trittleiste. Die Trittleiste umfasst ein Innenteil und ein Außenteil, wobei das Innenteil U-förmig ausgebildet ist und wobei das Innenteil einen Zwischenabschnitt aufweist, der sich entlang der Längsachse zwischen zwei Endabschnitten erstreckt, wobei die Endabschnitte des Innenteils zur Befestigung des Innenteils an dem Fahrzeug und/oder zur Befestigung an dem Außenteil ausgebildet sind. Das Außenteil weist zur Aufnahme des Innenteils eine Aufnahmenut auf. Ein erster Teil der mindestens zwei Teile der Trittleiste ist als nicht kraftaufnehmender Teil ausgelegt; ein zweiter Teil der mindestens zwei Teile der Trittleiste ist dagegen als kraftaufnehmender Teil ausgebildet.

Des Weiteren bildet der kraftaufnehmende Teil eine abdichtende Schnittstelle zu den Türflügeln aus, der andere innenliegende Teil dient der Abdichtung mit dem Fahrzeuginnenraum

Der erste Teil bildet einen in Bezug auf das Fahrzeug bzw. in Bezug auf die Türöffnung innenliegenden Teil mit reduzierter Stärke aus, welcher bei einer Erstmontage mit dem Fußboden abgedichtet wird. Er bildet also den nicht kraftaufnehmenden Teil aus.

Der zweite, äußere Teil, ist stabiler ausgeführt wird und kann bei Ein- und Ausbau der Schiebetrittkassette leicht demontiert werden, da dieser nicht mit dem Fahrzeugboden verklebt oder eingedichtet ist. Er bildet also den kraftaufnehmenden Teil aus.

Durch Entfernen des kraftaufnehmenden Teils ist es möglich, den Schiebetritt als vollständige Kassette unterhalb der Trittleiste zu montieren und demontieren. Die beiden Trittleistenteile können durch einen Formschluss und Verschrauben miteinander verbunden sein.

Durch die Montage des kompletten Trittes von außen unterhalb der Trittleiste ist die Montage stark vereinfacht und der Fußboden im Fahrzeug kann einfacher gestaltet werden.

Gemäß einer ersten bevorzugten Ausführungsform ist die Trittleiste dadurch gekennzeichnet, dass das Außenteil zur Befestigung an dem Innenteil und/oder dem Fahrzeug ausgebildet ist.

Insbesondere ist das Innenteil zur kraftschlüssigen und/oder formschlüssigen Befestigung an dem Fahrzeug ausgebildet. Ferner ist das Innenteil bevorzugt zur kraftschlüssigen und/oder formschlüssigen Befestigung an dem Außenteil ausgebildet. Insbesondere ist das Außenteil zur kraftschlüssigen und/oder formschlüssigen Befestigung an dem Innenteil ausgebildet. Es kann bevorzugt sein, dass das Außenteil zur Befestigung an dem Fahrzeug ausgebildet ist. Insbesondere kann das Außenteil zur kraftschlüssigen und/oder formschlüssigen Befestigung an dem Fahrzeug ausgebildet sein.

Die kraftschlüssige Befestigung ist bevorzugt eine Schraubverbindung. Insbesondere weist ein zur kraftschlüssigen Befestigung ausgebildetes Innenteil und/oder Außenteil Befestigungsaufnahmen für eine Schraubverbindung auf. Die Befestigungsaufnahmen sind vorzugsweise Durchgangslöcher. Ferner kann bevorzugt sein, dass die Befestigungsaufnahmen ein Gewinde, insbesondere ein Innengewinde umfassen. Die Befestigungsaufnahmen erstrecken sich vorzugsweise entlang einer Befestigungsachse, die sich im montierten Zustand der Trittleiste im Wesentlichen orthogonal zu der Längsachse des Fahrzeugs erstreckt. Insbesondere erstreckt sich die Befestigungsachse im montierten Zustand der Trittleiste im Wesentlichen orthogonal zu dem Fußboden des Fahrzeugs. Ferner können die Befestigungsaufnahmen Befestigungselemente umfassen. Befestigungselemente sind beispielsweise Schrauben, Bolzen oder Nieten.

Das Innenteil ist insbesondere das erste Teil der Trittleiste. Das Außenteil ist insbesondere das zweite Teil der Trittleiste.

Die mindestens zwei Teile der Trittleiste umfassen als Werkstoff insbesondere Metall, beispielsweise bevorzugt Stahl und/oder Aluminium, und/oder Kunststoff. Insbesondere weisen das Innenteil und das Außenteil denselben Werkstoff auf. Es kann ferner bevorzugt sein, dass das Außenteil einen Werkstoff umfasst, der eine höhere Festigkeit und/oder eine höhere Biegesteifigkeit aufweist als der Werkstoff, den das Innenteil umfasst. Es kann ferner bevorzugt sein, dass die mindestens zwei Teile der Trittleiste einen Faserverbundwerkstoff umfassen.

Eine solche Ausführungsform erleichtert die Montage des Schiebetrittsytems in vorteilhafter Weise. Insbesondere wird der Wartungsaufwand des Schiebetrittsystems reduziert. In der Folge sinken die Montagekosten und/oder Wartungskosten des Schiebetrittsystems.

Gemäß einer weiteren bevorzugten Fortbildung der Trittleiste weist das Außenteil einen Zwischenabschnitt auf, der sich entlang einer Längsachse zwischen zwei Befestigungsabschnitten erstreckt, wobei die zwei Befestigungsabschnitte zur Befestigung an dem Innenteil ausgebildet sind.

Die zwei Befestigungsabschnitte sind zur kraftschlüssigen und/oder formschlüssigen Befestigung an dem Fahrzeug und/oder dem Innenteil ausgebildet. Insbesondere weisen die zwei Befestigungsabschnitte die Befestigungsaufnahmen zur Befestigung, insbesondere für eine Schraubverbindung, mit dem Fahrzeug und/oder dem Innenteil auf. Es kann bevorzugt sein, dass das Außenteil an dem Fahrzeug und/oder dem Innenteil mit Durchgangsschrauben und einer Mutter befestigt wird. Insbesondere ist das Außenteil für eine lösbare Verbindung mit dem Innenteil und/oder dem Fahrzeug ausgebildet. Ferner können die Befestigungsabschnitte Befestigungselemente umfassen. Befestigungselemente sind beispielsweise Schrauben, Bolzen oder Nieten.

Die zwei Endabschnitte des Innenteils sind zur kraftschlüssigen und/oder formschlüssigen Befestigung des Innenteils an dem Fahrzeug und/oder dem Außenteil ausgebildet. Insbesondere weisen die zwei Endabschnitte die Befestigungsaufnahmen zur Befestigung, insbesondere für eine Schraubverbindung, mit dem Fahrzeug und/oder dem Außenteil auf. Es kann bevorzugt sein, dass das Innenteil an dem Fahrzeug und/oder dem Außenteil mit Durchgangsschrauben und einer Mutter befestigt wird. Insbesondere ist das Innenteil für eine lösbare Verbindung mit dem Außenteil und/oder dem Fahrzeug ausgebildet.

Gemäß einer ferner bevorzugten Fortbildung der Trittleiste ist diese dadurch gekennzeichnet, dass das Innenteil entlang der Längsachse eine Innenteillänge, entlang einer Querachse eine Innenteilbreite und entlang einer Höhenachse eine Innenteilhöhe aufweist, wobei bevorzugt die Innenteillänge größer ist als die Innenteilbreite und die Innenteilbreite größer ist als die Innenteilhöhe, wobei die Innenteilbreite der zwei Endabschnitte insbesondere größer ist als die Innenteilbreite des Zwischenabschnitts.

Die Längsachse erstreckt sich in Fahrtrichtung des Fahrzeugs, an dem die Trittleiste für den Betrieb zu montieren ist. Die Querachse erstreckt orthogonal zu der Längsachse zwischen den Seitenwänden in einer horizontalen Ebene. Die Höhenachse erstreckt sich orthogonal zu der Längsachse orthogonal zu dem Fußboden des Fahrzeugs in einer im Wesentlichen vertikalen Ebene.

Die Innenteilbreite kann entlang der Längsachse und/oder entlang der Höhenachse variieren. Es kann ferner bevorzugt sein, dass die Innenteilbreite entlang der Längsachse und/oder entlang der Höhenachse konstant ist.

Die Innenteillänge kann entlang der Querachse und/oder entlang der Höhenachse variieren. Es kann ferner bevorzugt sein, dass die Innenteillänge entlang der Querachse und/oder entlang der Höhenachse konstant ist.

Die Innenteilhöhe kann entlang der Querachse und/oder entlang der Längsachse variieren. Es kann ferner bevorzugt sein, dass die Innenteilhöhe entlang der Querachse und/oder entlang der Längsachse konstant ist.

Eine solche bevorzugte Ausführungsform erlaubt eine besonders einfache, schnelle und kostengünstige (Erst-)Montage und Wartung der Trittleiste und des Schiebetrittsytems.

Gemäß einer weiteren bevorzugten Ausführungsform weist das Außenteil entlang der Längsachse eine Außenteilläng, entlang der Querachse eine Außenteilbreite und entlang der Höhenachse eine Außenteilbreite auf. Vorzugsweise ist die Außenteilläng größer als die Außenteilbreite und die Außenteilbreite größer als die Außenteilhöhe, wobei die Innenteilbreite der zwei Endabschnitte des Innenteils größer ist als die Außenteilbreite des Außenteils.

Die Außenteilbreite kann entlang der Längsachse und/oder entlang der Höhenachse variieren. Es kann ferner bevorzugt sein, dass die Außenteilbreite entlang der Längsachse und/oder entlang der Höhenachse konstant ist.

Die Außenteillänge kann entlang der Querachse und/oder entlang der Höhenachse variieren. Es kann ferner bevorzugt sein, dass die Außenteillänge entlang der Querachse und/oder entlang der Höhenachse konstant ist.

Die Außenteilhöhe kann entlang der Querachse und/oder entlang der Längsachse variieren. Es kann ferner bevorzugt sein, dass die Außenteilhöhe entlang der Querachse und/oder entlang der Längsachse konstant ist.

Insbesondere ist die Außenteilhöhe der Befestigungsabschnitte des Außenteils kleiner als die Außenteilhöhe des Zwischenabschnitts des Außenteils.

Eine solche bevorzugte Ausführungsform erlaubt eine besonders einfache, schnelle und kostengünstige (Erst-)Montage und Wartung.

Die Aufnahmenut weist entlang der Längsachse eine Nutlänge, entlang der Querachse eine Nuttiefe und entlang der Höhenachse eine Nuthöhe auf. Bevorzugt ist die Nutlänge größer als die Nuthöhe und größer als die Nutbreite.

Die Nutlänge entspricht vorzugsweise der Außenteillänge. Die Nuthöhe kann insbesondere entlang der Querachse variieren. Vorzugsweise nimmt die Nuthöhe entlang der Querachse ab. Insbesondere ist bevorzugt, dass die Nuthöhe im Wesentlichen der Innenteilhöhe entspricht.

Insbesondere ist die Aufnahmenut zur formschlüssigen Aufnahme und Befestigung des Außenteils an dem Innenteil ausgebildet. Insbesondere ist die Aufnahmenut ausgebildet, dass das Innenteil - zumindest teilweise - in die Aufnahmenut einsteckbar ist.

Eine solche bevorzugte Ausführungsform erlaubt eine besonders einfache, schnelle und kostengünstige (Erst-)Montage und Wartung. Insbesondere für das Einstecken des Innenteils in die Aufnahmenut des Außenteils keine Werkzeuge erforderlich.

Gemäß einer weiteren bevorzugten Ausführungsform der Trittleiste ist die Außenteillänge des Außenteils kleiner ist als die Innenteillänge des Innenteils.

Gemäß einer ferner bevorzugten Fortbildung der Trittleiste ist die Innenteilhöhe des Innenteils kleiner als die Außenteilhöhe des Außenteils.

In einer weiteren bevorzugte Fortbildung der Trittleiste ist vorgesehen, dass die mindestens zwei Teile der Trittleiste mindestens ein Zwischenteil umfassen, wobei das mindestens eine Zwischenteil zwischen dem Innenteil und dem Außenteil angeordnet ist.

In einer weiteren bevorzugten Ausführungsform der Trittleiste ist diese dadurch gekennzeichnet, dass das Innenteil und das Außenteil kraftschlüssig und/oder formschlüssig miteinander verbunden sind.

Gemäß einer weiteren bevorzugten Ausführungsform ist die Trittleiste dadurch gekennzeichnet, dass das Innenteil einteilig ausgebildet ist und/oder das Außenteil einteilig ausgebildet ist.

Gemäß einem zweiten Aspekt der Erfindung wird die Aufgabe gemäß Anspruch 11 gelöst. Gemäß dem zweiten Aspekt der Erfindung ist ein Schiebetrittmodul vorgesehen. Das Schiebetrittmodul umfasst ein Montagerahmen zur Aufnahme und Befestigung eines Schiebetrittsystems an dem Fahrzeug, das Schiebetrittsystem und eine zuvor beschriebene Trittleiste gemäß dem ersten Aspekt der Erfindung, insbesondere gemäß einer der zuvor beschriebenen bevorzugten Ausführungsformen der Trittleiste. Das Schiebetrittmodul umfasst insbesondere ein Montagerahmen zur Aufnahme und Befestigung eines Schiebetrittsystems an dem Fußboden des Fahrzeugs.

Gemäß einem dritten Aspekt der Erfindung wird die Aufgabe gemäß Anspruch 12 gelöst. Gemäß dem dritten Aspekt der Erfindung ist ein Fahrzeug vorgesehen. Das Fahrzeug umfasst eine zuvor beschriebene Trittleiste gemäß dem ersten Aspekt der Erfindung, insbesondere gemäß einer der zuvor beschriebenen bevorzugten Ausführungsformen der Trittleiste.

Gemäß einem vierten Aspekt der Erfindung wird die Aufgabe gemäß Anspruch 13 gelöst. Gemäß dem vierten Aspekt der Erfindung ist eine Verwendung einer zuvor beschriebenen Trittleiste gemäß dem ersten Aspekt der Erfindung, insbesondere gemäß einer der zuvor beschriebenen bevorzugten Ausführungsformen der Trittleiste, für ein Fahrzeug vorgesehen, insbesondere für ein schienengebundenes Fahrzeug und/oder für ein Kraftfahrzeug.

Gemäß einem fünften Aspekt der Erfindung wird die Aufgabe gemäß Anspruch 14 gelöst. Gemäß dem fünften Aspekt der Erfindung ist ein Verfahren zur Montage einer zuvor beschriebenen Trittleiste gemäß dem ersten Aspekt der Erfindung, insbesondere gemäß einer der zuvor beschriebenen bevorzugten Ausführungsformen der Trittleiste, an einem Fahrzeug vorgesehen. Das erfindungsgemäße Verfahren ist gekennzeichnet durch die Schritte:
- Bereitstellen eines Fahrzeugs, und
- Bereitstellen einer zuvor beschriebenen Trittleiste gemäß dem ersten Aspekt der Erfindung, insbesondere gemäß einer bevorzugten Ausführungsformen der Trittleiste, und
- Befestigen eines Innenteils der Trittleiste an dem Fahrzeug, und
- Befestigen eines Außenteils der Trittleiste an dem Innenteil, und/oder
- Abdichten des Innenteils gegenüber dem Fahrzeug.

Der Schritt des Bereitstellens eines Fahrzeugs umfasst insbesondere das Bereitstellen eines gleisgebundenen Fahrzeugs und/oder eines Kraftfahrzeugs.

Zu den Vorteilen, Ausführungsformen und Ausführungsdetails der weiteren Aspekte der Erfindung und ihrer Fortbildungen wird auch auf die vorangegangene Beschreibung zu den entsprechenden Merkmalen der Trittleiste gemäß dem ersten Aspekt der Erfindung und deren bevorzugte Ausführungsformen verwiesen.

Bevorzugte Ausführungsformen der Erfindung werden beispielhaft anhand der beiliegenden Figuren beschrieben. Es zeigen:
- Fig. 1:: eine schematische Darstellung einer bevorzugten Ausführungsform eines Fahrzeugs;
- Fig. 2a-2b:: schematische Darstellungen einer Trittleiste;
- Fig. 3-6:: schematische Darstellung einer am Fahrzeug vollständig montierten Trittleiste; und
- Fig. 7-10:: schematische Darstellung einer am Fahrzeug teilweise montierten Trittleiste.

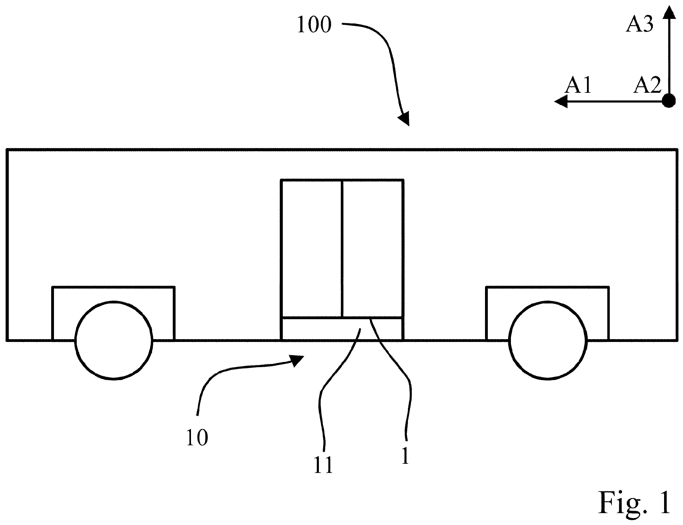

Figur 1 zeigt eine schematische Darstellung einer bevorzugten Ausführungsform eines Fahrzeugs 100. Das Fahrzeug 100 hat eine Haupterstreckungsrichtung entlang einer Längsachse A1. Das Fahrzeug 100 umfasst ein Schiebetrittmodul 10 umfassend ein Schiebetrittsystem 11, das über ein Montagerahmen 12 (nicht dargestellt) an dem Fahrzeug 100 unterhalb einer Trittleiste 1 montiert ist. Die Trittleiste 1 schließt den Fußboden (nicht dargestellt) des Fahrzeugs 100 nach außen und gegenüber der oberhalb der Trittleiste angeordneten Türsystem im montierten Zustand ab. Das Türsystem erstreckt sich im Wesentlichen in orthogonaler Richtung zu einer Fußbodenebene, die insbesondere die Trittleiste nach außen und gegenüber der oberhalb der Trittleiste angeordneten Türsystem abschließt, in die Höhe entlang einer Höhenachse A3.

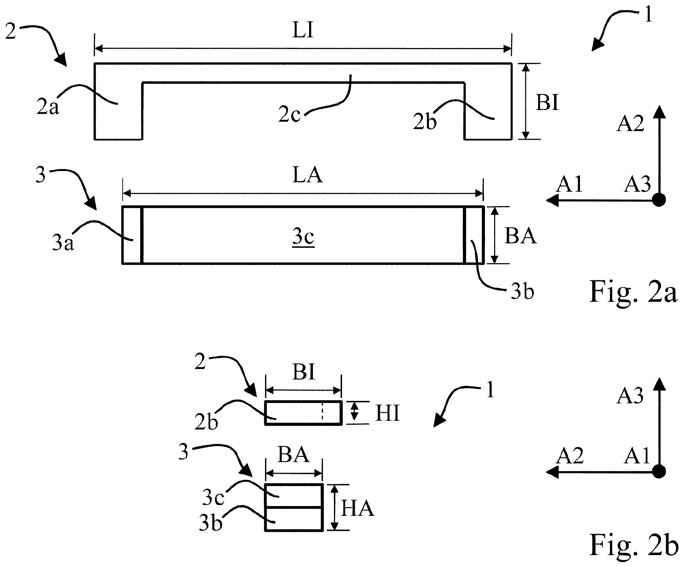

Figuren 2a und 2b zeigen eine schematische Darstellung einer bevorzugten Ausführungsform einer Trittleiste 1 im nicht am Fahrzeug 100 montierten Zustand. Diese Trittleiste 1 umfasst ein Innenteil 2 und ein Außenteil 3.

Figur 2a zeigt das Innenteil 2 in der Draufsicht, das eine Innenteillänge LI entlang der Längsachse A1 aufweist. Entlang einer Querachse A2 weist das Innenteil 2 eine Innenteilbreite BI auf, die kleiner ist als die Innenteillänge LI. Entlang der Längsachse A1 erstreckt sich das Innenteil 2 zwischen zwei Endabschnitten 2a, 2b mit einem Zwischenabschnitt 2c. Der Zwischenabschnitt 2c weist eine geringere Innenteilbreite BI auf als die Endabschnitte 2a, 2b des Innenteils 2. Insoweit variiert die Innenteilbreite BI des Innenteils entlang der Längsachse A1. Die in Figur 2a gezeigte schematische Darstellung des Innenteils 2 ist U-förmig ausgebildet. Das U-förmig ausgebildete Innenteil 2 ist geeignet, das Außenteil 3 kraft- und formschlüssig aufzunehmen.

Das in Figur 2a schematisch in der Draufsicht dargestellte Außenteil 3 weist eine Außenteillänge LA entlang der Längsachse A1 auf. Entlang einer Querachse A2 weist das Außenteil 3 eine Außenteilbreite BA auf, die kleiner ist als die Außenteillänge LA. Entlang der Längsachse A1 erstreckt sich das Außenteil 3 zwischen zwei Befestigungsabschnitten 3a, 3b mit einem Zwischenabschnitt 3c. In dieser bevorzugten Ausführungsform des Außenteils 3 ist die Außenteilbreite BA des Außenteils 3 entlang der Längsachse A1 und der Höhenachse A3 konstant. Das in Figur 2a schematisch dargestellte Außenteil 3 ist insbesondere lattenförmig bzw. stabförmig ausgebildet.

Das in Figur 2b in der Seitenansicht schematisch dargestellte Innenteil 2 weist eine Innenteilhöhe HI entlang der Höhenachse A3 auf. Die Innenteilhöhe HI dieser bevorzugten Ausführungsform des Innenteils 2 ist konstant entlang der Längsachse A1 und der Querachse A2.

Das in Figur 2b in der Seitenansicht schematisch dargestellte Außenteil 3 weist eine Außenteilhöhe HA entlang der Höhenachse A3 auf. Die Außenteilhöhe HA des Außenteils 3 variiert entlang der Längsachse A1. In dieser bevorzugten Ausführungsform ist die Außenteilhöhe HA der Befestigungsabschnitte 3a, 3b geringer als die Außenteilhöhe HA des Zwischenabschnitts 3c des Außenteils 3. Insoweit variiert die Außenteilhöhe HA entlang der Längsachse A1.

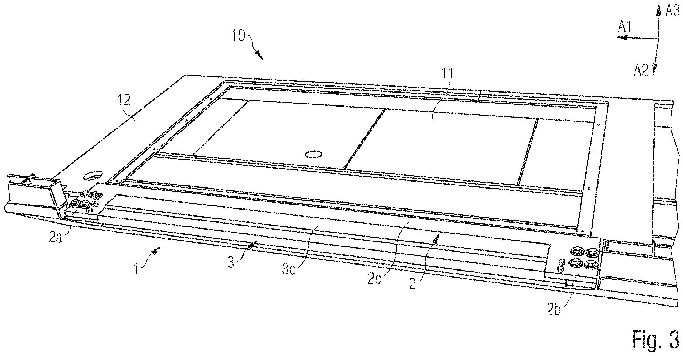

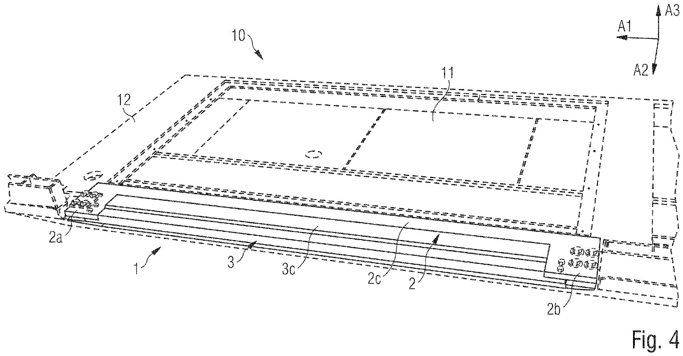

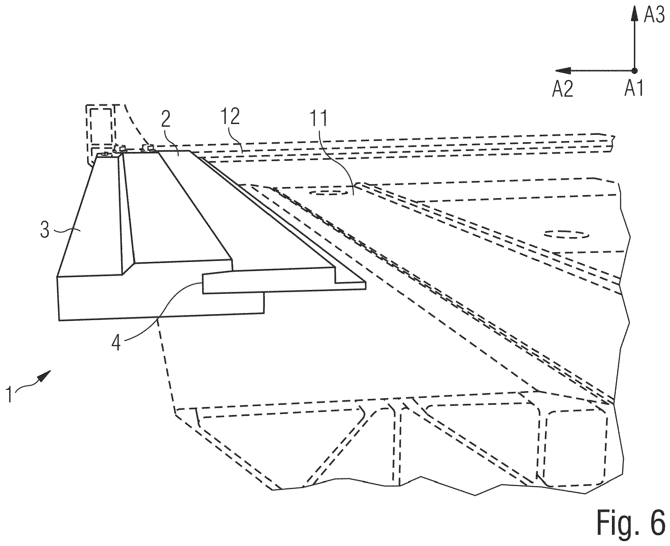

Figuren 3-6 zeigen schematische Darstellungen einer erfindungsgemäßen Ausführungsform eines Schiebetrittmoduls 10. Das Schiebetrittmodul 10 ist an dem Fahrzeug 100 (nicht dargestellt) befestigt. Das Schiebetrittmodul 10 umfasst einen Montagerahmen 12, an dem ein Schiebetrittsystem 11 und eine Trittleiste 1 in einer erfindungsgemäßen Ausführungsform montiert sind.

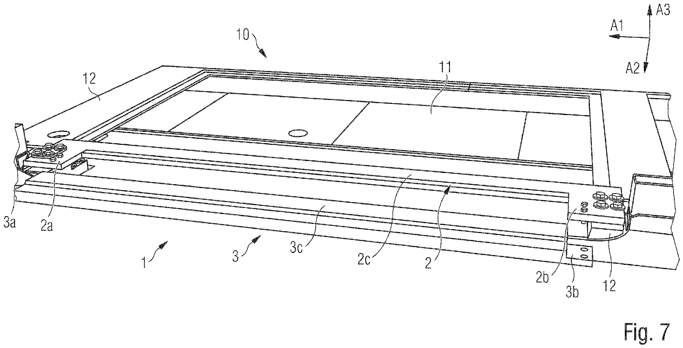

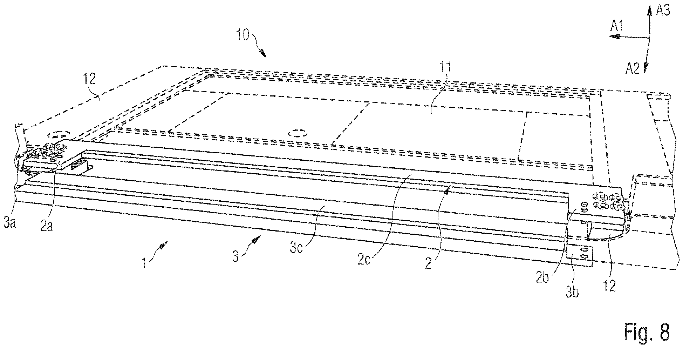

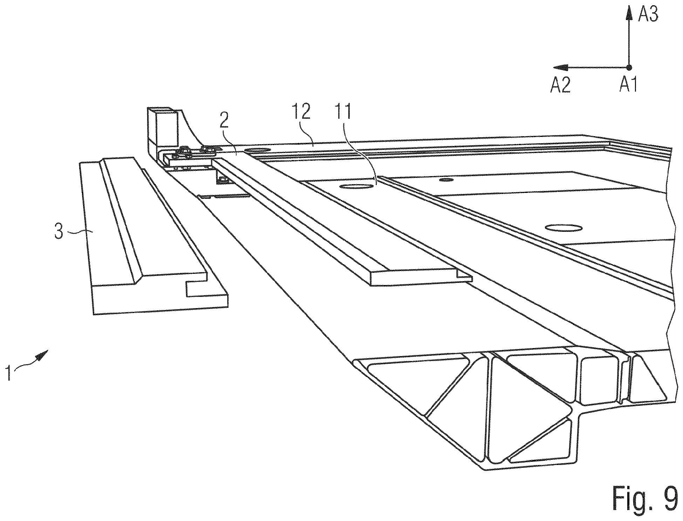

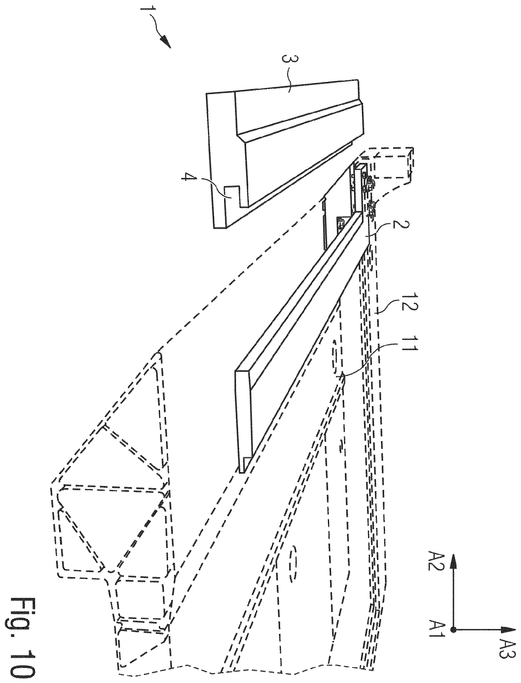

Figuren 7-10 zeigen schematische Darstellungen der erfindungsgemäßen Ausführungsform des in den Figuren 3-6 schematisch dargestellten Schiebetrittmoduls 10, wobei das Außenteil 3 der Trittleiste 1 nicht montiert ist.

Die in den Figuren 3-10 schematisch dargestellte erfindungsgemäße Ausführungsform der Trittleiste 1 umfasst ein Innenteil 2 und eine Außenteil 3.

Das in den Figuren 3-10 schematisch dargestellte Innenteil 2 ist im Wesentlichen entsprechend der in den Figuren 2a, 2b schematisch dargestellten Ausführungsform des Innenteils 2 ausgebildet. Die Endabschnitte 2a, 2b des Innenteils 2 umfassen Befestigungsaufnahmen für Schraubverbindungen zur kraftschlüssigen Befestigung des Innenteils 2 an dem Montagerahmen 12 des Schiebetrittsystems 11. In Richtung der Höhenachse A3 ist das Innenteil 2 auf dem Montagerahmen 12 aufgelegt. Insoweit ist das Innenteil 2 mit dem Fahrzeug 100 über den Montagerahmen 12 in wenigstens einer Richtung entlang der Höhenachse A3 ferner formschlüssig verbunden.

Das in den Figuren 3-10 schematisch dargestellte Außenteil 2 ist im Wesentlichen entsprechend der in den Figuren 2a, 2b schematisch dargestellten Ausführungsform der Außenteils 2 ausgebildet. Die Befestigungsabschnitte 3a, 3b des Außenteils 3 sind ausgebildet kraftschlüssig, vorliegend mit einer Schraubenverbindung, an dem Innenteil 2 befestigt zu werden. Es ist vorgesehen, dass das Innenteil 2 in dieser erfindungsgemäßen Ausführungsform in dem jeweiligen Endabschnitt 2a, 2b vier Durchgangsbohrungen zur Aufnahme von Schrauben umfasst. Die Schrauben werden mit dem Montagerahmen 12 verschraubt. Ferner ist vorgesehen, dass die jeweiligen Endabschnitte 2a, 2b zwei Durchgangsbohrungen als Befestigungsaufnahmen aufweisen, um das Außenteil 3 an dem Innenteil 2 zu befestigen. Die Befestigungsabschnitte 3a, 3b des Außenteils 3 umfassen jeweils zwei Bohrungen mit Innengewinde, um das Außenteil 3 an dem Innenteil 2 zu befestigen. Es kann auch bevorzugt sein, dass Befestigungsabschnitte 3a, 3b des Außenteils 3 Durchgangsbohrungen ohne Gewinde aufweisen zur Befestigung an dem Innenteil 2.

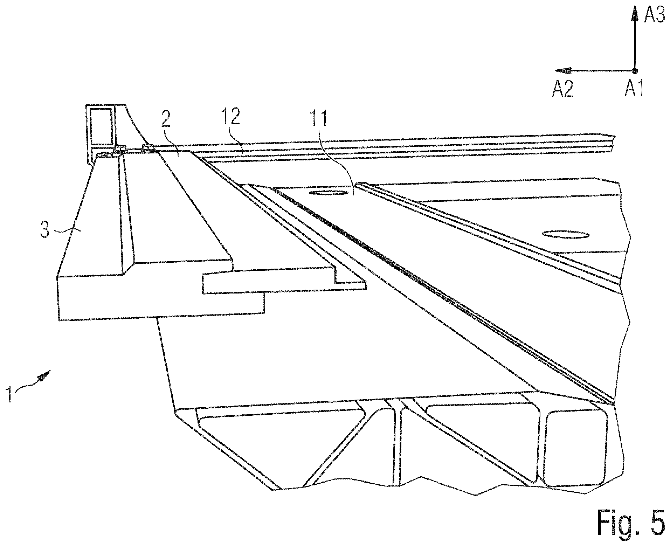

Ferner umfasst das Außenteil 3 in dieser in den Figuren 3-10 erfindungsgemäßen Ausführungsform der Trittleiste 1 eine Aufnahmenut 4, wie beispielsweise die schematische Schnittansicht der Trittleiste 1 in Figur 5 zeigt. Im vollständig montierten Zustand der Trittleiste 1 ist die Innenleiste 2 in die Aufnahmenut 4 des Außenteils 3 formschlüssig eingesteckt. Hierdurch wird eine besonders stabile Trittleiste 1 sowie leicht zu montierende und demontierende Trittleiste 1 erreicht. Die Aufnahmenut 4 erstreckt sich vorzugsweise entlang der Längsachse A1 mit einer Nutlänge. Die Aufnahmenut hat bevorzugt eine konstante Nuttiefe in Richtung der Querachse A2 und eine konstante Nuthöhe in Richtung der Höhenachse A3.

### Bezugszeichenliste

- 1: Trittleiste
- 2: Innenteil der Trittleiste
- 3: Außenteil der Trittleiste
- 2a/2b: Endabschnitte des Innenteils
- 2c: Zwischenabschnitt des Innenteils
- 3a/3b: Befestigungsabschnitte des Außenteils
- 3c: Zwischenabschnitt des Außenteils
- 4: Aufnahmenut
- 10: Schiebetrittmodul
- 11: Schiebetrittsystem
- 12: Montagerahmen des Schiebetrittsystems
- 100: Fahrzeug
- A1: Längsachse
- A2: Querachse
- A3: Höhenachse
- LI: Länge des Innenteils
- HI: Höhe des Innenteils
- BI: Breite des Innenteils
- LA: Länge des Außenteils
- HA: Höhe des Außenteils
- BA: Breite des Außenteils

## Patentansprüche

1. Trittleiste (1) für ein Fahrzeug (100), wobei die Trittleiste (1) aus mindestens zwei Teilen (2, 3) gebildet ist, umfassend ein Innenteil (2) und ein Außenteil (3), wobei das Innenteil (2) U-förmig ausgebildet ist und wobei das Innenteil (2) einen Zwischenabschnitt (2c) aufweist, der sich entlang der Längsachse (A1) zwischen zwei Endabschnitten (2a, 2b) erstreckt, wobei die Endabschnitte (2a, 2b) des Innenteils (2) zur Befestigung des Innenteils (2) an dem Fahrzeug (100) und/oder zur Befestigung an dem Außenteil (3) ausgebildet sind, **dadurch gekennzeichnet, dass** das Außenteil (3) zur Aufnahme des Innenteils (2) eine Aufnahmenut (4) aufweist.

2. Trittleiste (1) nach Anspruch 1, **dadurch gekennzeichnet, dass** das Außenteil (3) zur Befestigung an dem Innenteil (2) und/oder dem Fahrzeug (100) ausgebildet ist.

3. Trittleiste (1) nach einem der vorhergehenden Ansprüche 1-2, **dadurch gekennzeichnet, dass** das Außenteil (3) einen Zwischenabschnitt (3c) aufweist, der sich entlang einer Längsachse (A1) zwischen zwei Befestigungsabschnitten (3a, 3b) erstreckt, wobei die zwei Befestigungsabschnitte (3a, 3b) zur Befestigung an dem Innenteil (2) ausgebildet sind.

4. Trittleiste (1) nach einem der vorhergehenden Ansprüche 1-3, **dadurch gekennzeichnet, dass** das Innenteil (2) entlang der Längsachse (A1) eine Innenteilläng (LI), entlang einer Querachse (A2) eine Innenteilbreite (BI) und entlang einer Höhenachse (A3) eine Innenteilhöhe (HI) aufweist, wobei bevorzugt die Innenteilläng (LI) größer ist als die Innenteilbreite (BI) und die Innenteilbreite (BI) größer ist als die Innenteilhöhe (HI), wobei die Innenteilbreite (BI) der zwei Endabschnitte (2a, 2b) insbesondere größer ist als die Innenteilbreite (BI) des Zwischenabschnitts (2c).

5. Trittleiste (1) nach einem der vorhergehenden Ansprüche 1-4, **dadurch gekennzeichnet, dass** das Außenteil (3) entlang der Längsachse eine Außenteilläng (LA), entlang der Querachse (A2) eine Außenteilbreite (BA) und entlang der Höhenachse (A3) eine Außenteilbreite (BA) aufweist, wobei bevorzugt die Außenteilläng (LA) größer ist als die Außenteilbreite (BA) und die Außenteilbreite (BA) größer ist als die Außenteilhöhe (HA), wobei die Innenteilbreite (BI) der zwei Endabschnitte (2a, 2b) des Innenteils (2) größer ist als die Außenteilbreite (BA) des Außenteils (3).

6. Trittleiste (1) nach einem der vorhergehenden Ansprüche 1-5, **dadurch gekennzeichnet, dass** die Außenteillänge (LA) des Außenteils (3) kleiner ist als die Innenteillänge (LI) des Innenteils (2).

7. Trittleiste (1) nach einem der vorhergehenden Ansprüche 1-6, **dadurch gekennzeichnet, dass** die Innenteilhöhe (HI) des Innenteils (2) kleiner ist als die Außenteilhöhe (HA) des Außenteils (3).

8. Trittleiste (1) nach einem der vorhergehenden Ansprüche 1-7, **dadurch gekennzeichnet, dass** die mindestens zwei Teile (2, 3) der Trittleiste (1) mindestens ein Zwischenteil umfassen, wobei das mindestens eine Zwischenteil zwischen dem Innenteil (2) und dem Außenteil (3) angeordnet ist.

9. Trittleiste (1) nach einem der vorhergehenden Ansprüche 1-8, **dadurch gekennzeichnet, dass** das Innenteil (2) und das Außenteil (3) kraftschlüssig und/oder formschlüssig miteinander verbunden sind.

10. Trittleiste (1) nach einem der vorhergehenden Ansprüche 1-9, **dadurch gekennzeichnet, dass** das Innenteil (2) einteilig ausgebildet ist und/oder das Außenteil (3) einteilig ausgebildet ist.

11. Schiebetrittmodul (10) umfassend ein Montagerahmen (12) zur Aufnahme und Befestigung eines Schiebetrittsystems (11) an dem Fahrzeug (100), das Schiebetrittsystem (11) und eine Trittleiste (1), **dadurch gekennzeichnet, dass** die Trittleiste (1) nach einem der vorhergehenden Ansprüche 1-10 ausgebildet ist.

12. Fahrzeug (100) **gekennzeichnet durch** eine Trittleiste (1) nach einem der vorhergehenden Ansprüche 1-10.

13. Verwendung einer Trittleiste (1) nach einem der vorhergehenden Ansprüche 1-10 für ein Fahrzeug (100), insbesondere für ein schienengebundenes Fahrzeug und/oder für ein Kraftfahrzeug.

14. Verfahren zur Montage einer Trittleiste (1) nach einem der vorhergehenden Ansprüche 1-10 an einem Fahrzeug (100), **gekennzeichnet durch** die Schritte:
• Bereitstellen des Fahrzeugs (100), und
• Bereitstellen der Trittleiste (1) nach einem der vorhergehenden Ansprüche 1-10, und
• Befestigen eines Innenteils (2) der Trittleiste (1) an dem Fahrzeug (100), und
• Befestigen eines Außenteils (3) der Trittleiste (1) an dem Innenteil (2), und/oder
• Abdichten des Innenteils (2) gegenüber dem Fahrzeug (100).

## Claims

1. Tread strip (1) for a vehicle (100), wherein the tread strip (1) is formed of at least two parts (2, 3), comprising an inner part (2) and an outer part (3), wherein the inner part (2) is U-shaped and wherein the inner part (2) has an intermediate portion (2c), which extends along the longitudinal axis (A1) between two end portions (2a, 2b), wherein the end portions (2a, 2b) of the inner part (2) are designed to attach the inner part (2) to the vehicle (100) and/or for attachment to the outer part (3), **characterized in that** the outer part (3) has an accommodating groove (4) for accommodating the inner part (2).

2. Tread strip (1) according to Claim 1, **characterized in that** the outer part (3) is designed for attachment to the inner part (2) and/or the vehicle (100).

3. Tread strip (1) according to one of the preceding Claims 1-2,
**characterized**
**in that** the outer part (3) has an intermediate portion (3c), which extends along a longitudinal axis (A1) between two attachment portions (3a, 3b), wherein the two attachment portions (3a, 3b) are designed for attachment to the inner part (2).

4. Tread strip (1) according to one of the preceding Claims 1-3,
**characterized**
**in that** the inner part (2) has an inner-part length (LI) along the longitudinal axis (A1), an inner-part width (BI) along a transverse axis (A2) and an inner-part height (HI) along a vertical axis (A3), wherein, preferably, the inner-part length (LI) is greater than the inner-part width (BI), and the inner-part width (BI) is greater than the inner-part height (HI), wherein the inner-part width (BI) of the two end portions (2a, 2b) is, in particular, greater than the inner-part width (BI) of the intermediate portion (2c).

5. Tread strip (1) according to one of the preceding Claims 1-4, **characterized in that** the outer part (3) has an outer-part length (LA) along the longitudinal axis, an outer-part width (BA) along the transverse axis (A2) and an outer-part width (BA) along the vertical axis (A3), wherein, preferably, the outer-part length (LA) is greater than the outer-part width (BA), and the outer-part width (BA) is greater than the outer-part height (HA), wherein the inner-part width (BI) of the two end portions (2a, 2b) of the inner part (2) is greater than the outer-part width (BA) of the outer part (3).

6. Tread strip (1) according to one of the preceding Claims 1-5,
**characterized in that** the outer-part length (LA) of the outer part (3) is smaller than the inner-part length (LI) of the inner part (2).

7. Tread strip (1) according to one of the preceding Claims 1-6,
**characterized in that** the inner-part height (HI) of the inner part (2) is smaller than the outer-part height (HA) of the outer part (3).

8. Tread strip (1) according to one of the preceding Claims 1-7,
**characterized in that** the at least two parts (2, 3) of the tread strip (1) comprise at least one intermediate part, wherein the at least one intermediate part is arranged between the inner part (2) and the outer part (3).

9. Tread strip (1) according to one of the preceding Claims 1-8,
**characterized in that** the inner part (2) and the outer part (3) are connected to each other non-positively and/or positively.

10. Tread strip (1) according to one of the preceding Claims 1-9,
**characterized in that** the inner part (2) is designed as a single part and/or the outer part (3) is designed as a single part.

11. Sliding tread module (10) comprising a mounting frame (12) for accommodating and attaching a sliding tread system (11) to the vehicle (100), the sliding tread system (11) and a tread strip (1), **characterized in that** the tread strip (1) is designed according to one of the preceding Claims 1-10.

12. Vehicle (100) **characterized by** a tread strip (1) according to one of the preceding Claims 1-10.

13. Use of a tread strip (1) according to one of the preceding Claims 1-10 for a vehicle (100), in particular for a rail-bound vehicle and/or a motor vehicle.

14. Method for mounting a tread strip (1) according to one of the preceding Claims 1-10 on a vehicle (100), **characterized by** the steps:
• providing the vehicle (100), and
• providing the tread strip (1) according to one of the preceding Claims 1-10, and
• attaching an inner part (2) of the tread strip (1) to the vehicle (100), and
• attaching an outer part (3) of the tread strip (1) to the inner part (2), and/or
• sealing the inner part (2) in relation to the vehicle (100).

## Revendications

1. Marchepied (1) pour un véhicule (100), dans lequel le marchepied (1) est formé d'au moins deux parties (2, 3), comprenant une partie intérieure (2) et une partie extérieure (3), dans lequel la partie intérieure (2) est réalisée en forme de U et dans lequel la partie intérieure (2) présente une section intermédiaire (2c) qui s'étend le long de l'axe longitudinal (A1) entre deux sections d'extrémité (2a, 2b), dans lequel les sections d'extrémité (2a, 2b ) de la partie intérieure (2) sont conçues pour fixer la partie intérieure (2) au véhicule (100) et/ou pour être fixées à la partie extérieure (3), **caractérisé en ce que** la partie extérieure (3) présente une rainure de réception (4) destinée à recevoir la partie intérieure (2).

2. Marchepied (1) selon la revendication 1, **caractérisé en ce que** la partie extérieure (3) est conçue pour être fixée à la partie intérieure (2) et/ou au véhicule (100).

3. Marchepied (1) selon l'une quelconque des revendications précédentes 1 à 2, **caractérisé en ce que** la partie extérieure (3) présente une section intermédiaire (3c) qui s'étend le long d'un axe longitudinal (A1) entre deux sections de fixation (3a, 3b), dans lequel les deux sections de fixation (3a, 3b) sont conçues pour être fixées à la partie intérieure (2).

4. Marchepied (1) selon l'une quelconque des revendications précédentes 1 à 3, **caractérisé en ce que** la partie intérieure (2) présente une longueur de partie intérieure (LI) le long de l'axe longitudinal (A1), une largeur de partie intérieure (BI) le long d'un axe transversal (A2) et une hauteur de partie intérieure (HI) le long d'un axe de hauteur (A3), dans lequel de préférence la longueur de partie intérieure (LI) est plus grande que la largeur de partie intérieure (BI) et la largeur de partie intérieure (BI) est plus grande que la hauteur de partie intérieure (HI), dans lequel la largeur de partie intérieure (BI) des deux sections d'extrémité (2a, 2b) est en particulier plus grande que la largeur de partie intérieure (BI) de la section intermédiaire (2c).

5. Marchepied (1) selon l'une quelconque des revendications précédentes 1 à 4, **caractérisé en ce que** la partie extérieure (3) présente une longueur de partie extérieure (LA) le long de l'axe longitudinal, une largeur de partie extérieure (BA) le long de l'axe transversal (A2) et une largeur de partie extérieure (BA) le long de l'axe de hauteur (A3), dans lequel de préférence la longueur de partie extérieure (LA) est plus grande que la largeur de partie extérieure (BA) et la largeur de partie extérieure (BA) est plus grande que la hauteur de partie extérieure (HA), dans lequel la largeur de partie intérieure (BI) des deux sections d'extrémité (2a, 2b) de la partie intérieure (2) est plus grande que la largeur de partie extérieure (BA) de la partie extérieure (3).

6. Marchepied (1) selon l'une quelconque des revendications précédentes 1 à 5, **caractérisé en ce que** la longueur de partie extérieure (LA) de la partie extérieure (3) est inférieure à la longueur de partie intérieure (LI) de la partie intérieure (2).

7. Marchepied (1) selon l'une quelconque des revendications précédentes 1 à 6, **caractérisé en ce que** la hauteur de partie intérieure (HI) de la partie intérieure (2) est inférieure à la hauteur de partie extérieure (HA) de la partie extérieure (3).

8. Marchepied (1) selon l'une quelconque des revendications précédentes 1 à 7, **caractérisé en ce que** lesdites au moins deux parties (2, 3) du marchepied (1) comprennent au moins une partie intermédiaire, dans lequel ladite au moins une partie intermédiaire est disposée entre la partie intérieure (2) et la partie extérieure (3).

9. Marchepied (1) selon l'une quelconque des revendications précédentes 1 à 8, **caractérisé en ce que** la partie intérieure (2) et la partie extérieure (3) sont reliées l'une à l'autre par adhérence et/ou à engagement positif.

10. Marchepied (1) selon l'une quelconque des revendications précédentes 1 à 9, **caractérisé en ce que** la partie intérieure (2) est réalisée en une seule pièce et/ou que la partie extérieure (3) est réalisée en une seule pièce.

11. Module de marche coulissante (10) comprenant un cadre de montage (12) pour recevoir et fixer un système de marche coulissante (11) au véhicule (100), ledit système de marche coulissante (11) et un marchepied (1), **caractérisé en ce que** le marchepied (1) est conçu selon l'une quelconque des revendications précédentes 1 à 10.

12. Véhicule (100), **caractérisé par** un marchepied (1) selon l'une quelconque des revendications précédentes 1 à 10.

13. Utilisation d'un marchepied (1) selon l'une quelconque des revendications précédentes 1 à 10 pour un véhicule (100), en particulier pour un véhicule roulant sur rail et/ou pour un véhicule automobile.

14. Procédé de montage d'un marchepied (1) selon l'une quelconque des revendications précédentes 1 à 10, sur un véhicule (100), **caractérisé par** les étapes consistant à:
- fournir le véhicule (100), et
- fournir le marchepied (1) selon l'une quelconque des revendications précédentes 1 à 10, et
- fixer une partie intérieure (2) du marchepied (1) au véhicule (100), et
- fixer une partie extérieure (3) du marchepied (1) à la partie intérieure (2), et/ou
- rendre étanche la partie intérieure (2) par rapport au véhicule (100).
